# EUROPÄISCHE PATENTSCHRIFT

(11) **EP 1 908 613 B1**
(45) Veröffentlichungstag und Bekanntmachung des Hinweises auf die Patenterteilung: **26.08.2009**
(21) Anmeldenummer: 06291558.2
(22) Anmeldetag: 05.10.2006
(51) Int. Cl.: B60H 1/00

(54) **Gebläseeinheit, insbesondere für ein Kraftfahrzeug**
Blower unit, in particular for vehicles
Unité soufflante, notamment pour véhicule

(43) Veröffentlichungstag der Anmeldung: 09.04.2008
(73) Patentinhaber: Behr France Rouffach SAS, 68250 Rouffach (FR)
(72) Erfinder: Fuentes, Céline, 68124 Logelbach (FR); Fuentes, Nicolas, 68124 Logelbach (FR); Klein, Henri, 68000 Colmar (FR); Richard, Sebastien, 39130 Cognac (FR)
(74) Vertreter: Grauel, Andreas

(56) Entgegenhaltungen:
- EP-A- 1 614 564
- DE-A1- 19 908 501
- FR-A1- 2 529 515
- US-A1- 1 978 459

## Beschreibung

Die Erfindung betrifft eine Gebläseeinheit, insbesondere für ein Kraftfahrzeug, gemäß dem Oberbegriff des Anspruchs 1.

Aus der US 5,111,738 A ist eine Gebläseeinheit bekannt, die für links- und rechtsgelenkte Fahrzeuge verwendet werden kann. Hierbei weist die Gebläseeinheit ein Gehäuse mit einer oberen Wand, einer unteren Wand und zwei einander gegenüberliegende Wände auf, die zusammen zwei offene und einander gegenüberliegende Endflächen mit dem gleichen Profil definieren. Das Gehäuse weist auch einen Montagerahmen mit einem Gebläse auf, das in den Rahmen eingebaut ist. Ferner sind ein Laufrad, ein Gebläsemotor für das Laufrad und zwei symmetrische Halbschalen vorgesehen, die zusammengebaut werden, um ein Spiralgehäuse zu bilden, in dem das Laufrad und der Motor angeordnet sind. Eine derartige Gebläseeinheit ist jedoch in aller Regel nur für einen Fahrzeugtyp geeignet.

EP 1 420 168 und EP 161 4 564 zeigen ein- und zweiflutige Gebläseeinheiten, die sich jeweils durch ihr Gehäuse unterscheiden. Die zwischenveröffentlichte EP 1 827 213 offenbart ein- und zweiflutige Gebläseeinheiten mit jeweils unterschiedlichen Laufrädern.

Es ist Aufgabe der Erfindung, eine verbesserte Gebläseeinheit zur Verfügung zu stellen.

Diese Aufgabe wird gelöst durch eine Gebläseeinheit mit den Merkmalen des Anspruchs 1. Vorteilhafte Ausgestaltungen sind Gegenstand der Unteransprüche.

Erfindungsgemäß ist eine Gebläseeinheit vorgesehen, insbesondere für ein Kraftfahrzeug, mit einem zweiflutigen Laufrad, wobei eine Abdeckung die Öffnung des Ansaugkanals einer Flut beständig verschließt. Die Abdeckung ist als Deckel ausgebildet und an Stelle eines Ansaugkanals am Gehäuse fixiert, bspw. mittels Verclipsen oder mit Schrauben. Durch das Verschließen des einen Ansaugkanals wird die Luft nur über den einzigen vorhandenen Ansaugkanal angesaugt, d.h. die zweiflutige Gebläseeinheit wird im Prinzip nur als einflutige Gebläseeinheit verwendet. Die angesaugte Luft verteilt sich im Gehäuse auf beide Fluten und wird dem Ausblaskanal zugeführt. Eine derartige Gebläseeinheit kann insbesondere für kleinere Kraftfahrzeuge verwendet werden, während die große, mit zwei Ansaugkanälen ausgebildete und zweiflutig betriebene Gebläseeinheit bspw. für Vans verwendet werden kann. Durch die abgesehen vom fehlenden Ansaugkanal im Wesentlichen gleiche Ausgestaltung der Gebläseeinheiten können viele Gleichteile verwendet werden, wodurch die Stückzahlen erhöht und dadurch die Herstellungskosten verringert werden können. Im Falle der einflutig verwendeten Gebläseeinheit lässt sich zudem einfach bei entsprechenden Bauraumbedingungen von Links- auf Rechtslenker umstellen.

Vorzugsweise entspricht der Ausblaskanal bei einer einflutig verwendeten Gebläseeinheit dem Ausblaskanal einer zweiflutig verwendeten Gebläseeinheit, d.h. im Bereich eines nachfolgenden Heiz- und/oder Klimageräts sind bei entsprechender Ausgestaltung der Gebläseeinheit und ausreichend Bauraum keine Änderungen zwischen einzelnen Varianten erforderlich.

Der Querschnitt des Ansaugkanals bei einer einflutig verwendeten Gebläseeinheit ist vorzugsweise größer als der Querschnitt eines Ansaugkanals bei einer zweiflutig verwendeten Gebläseeinheit, er kann jedoch auch unverändert sein, so dass weitere Gleichteile möglich sind. Im Falle eines unterschiedlichen Querschnitts ist der Querschnitt der einflutig verwendeten Gebläseeinheit bevorzugt maximal doppelt so groß wie der Querschnitt eines Ansaugkanals bei einer zweiflutig verwendeten Gebläseeinheit, insbesondere ist er 1,2 bis 1,7-mal, besonders bevorzugt 1,5-mal, so groß.

Die Gebläseeinheit weist vorzugsweise ein mehrteilig ausgebildetes Gehäuse auf Kunststoff auf. Derartige Gehäuse lassen sich kostengünstig herstellen und ermöglichen einen relativ einfachen Ein- und Ausbau des Laufrads und/oder Motors. Insbesondere bevorzugt ist das Gehäuse in der Mittelebene trennbar.

Bevorzugt wird eine derartige Gebläseeinheit in ihrer zweiflutig benutzten Form in einem Van oder einem anderen, größeren Kraftfahrzeug eingebaut und in ihrer einflutig benutzten Form in einem kleineren Kraftfahrzeug. Dabei kann sie Teil einer Heiz- oder Klimaanlage sein.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht einer Gebläseeinheit mit zweiflutigem Gebläse, das einflutig betrieben wird, gemäß dem Ausführungsbeispiel,
- Fig. 2: eine Ansicht der Gebläseeinheit von Fig. 1 ohne Gehäuse,
- Fig. 3: eine Ansicht der Gebläseeinheit von Fig. 1 von hinten,
- Fig. 4: eine Fig. 1 entsprechende Ansicht der Gebläseeinheit mit einem Fig. 1 entsprechenden, zweiflutigen Gebläse, das zweiflutig betrieben wird,

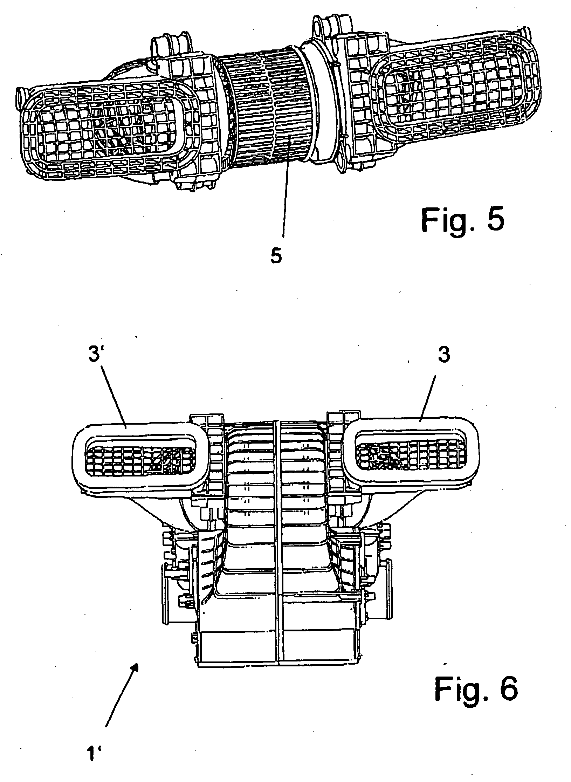

- Fig. 5: eine Ansicht der Gebläseeinheit von Fig. 4 ohne Gebläse, und
- Fig. 6: eine Ansicht der Gebläseeinheit von Fig. 4 von hinten.

Um die Erfindung besser verständlich zu machen, wird im Folgenden zuerst der Aufbau einer Gebläseeinheit 1' einer Kraftfahrzeug-Klimaanlage mit nachfolgend der Gebläseeinheit 1' angeordnetem Verdampfer und Heizer und einer Mehrzahl von die temperierte Luft dem Fahrzeuginnenraum zuführenden Luftkanälen beschrieben, die in einem Van verwendet wird. Der Aufbau der Klimaanlage per se entspricht dem einer herkömmlichen Klimaanlage und wird daher im Folgenden nicht näher beschrieben.

Die Gebläseeinheit 1' weist ein mehrteilig ausgebildetes Gehäuse 2 aus Kunststoff mit zwei Ansaugkanälen 3 und 3', einem zweiteiligen Spiralteil 4 und einem Ausblaskanal 5, ein auf einer Welle angeordnetes, zweiflutiges Laufrad 6 aus Kunststoff und einen Antriebsmotor auf. Die Ansaugkanäle 3 sind rechts und links des Laufrades 6 angeordnet, so dass mit Hilfe des sich drehenden zweiflutigen Laufrads 6 von beiden Seiten Luft angesaugt und in den Ausblaskanal 5 geschoben wird. Der Aufbau der Gebläseeinheit 1' ist im Wesentlichen spiegelbildlich zur Mittelebene, welche zwischen den beiden Fluten verläuft. Der Aufbau der Gebläseeinheit 1' entspricht im Wesentlichen dem einer herkömmlichen zweiflutigen Gebläseeinheit.

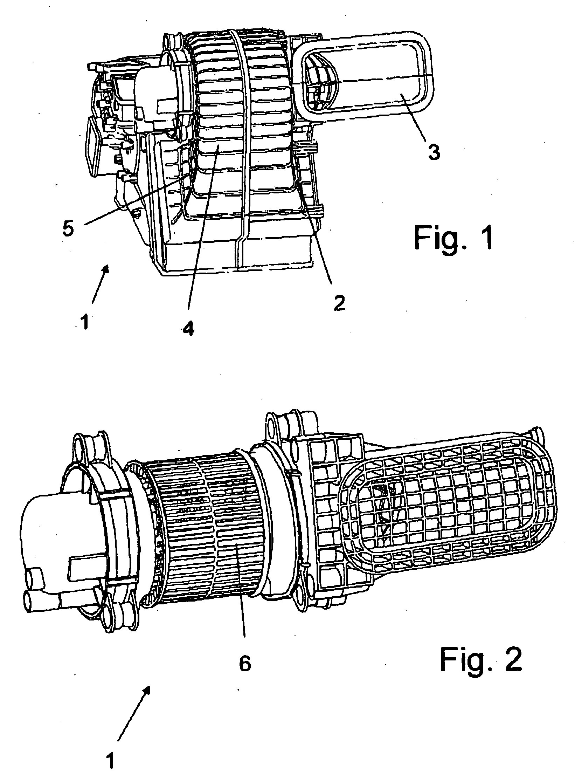

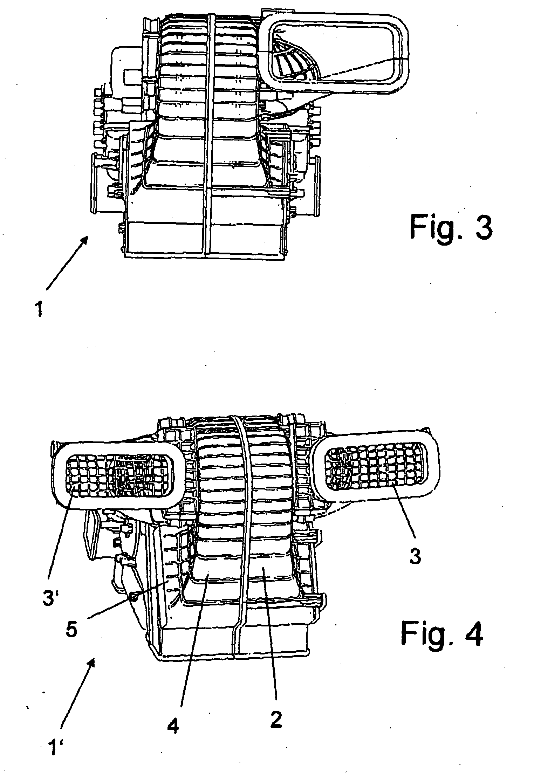

In den Figuren 1 bis 3 ist eine erfindungsgemäße Gebläseeinheit 1 gemäß dem Ausführungsbeispiel dargestellt. Diese Gebläseeinheit 1 entspricht sofern nachfolgend nicht erwähnt der zuvor beschriebenen Gebläseeinheit 1'.

Sie weist ein mehrteilig ausgebildetes Gehäuse 2 mit - im Unterschied zur zuvor beschriebenen Gebläseeinheit 1' - nur einem Ansaugkanal 3, einem zweiteiligen Spiralteil 4 und einem Ausblaskanal 5, ein auf einer Welle angeordnetes, zweiflutiges Laufrad 6 und einen Antriebsmotor auf. Wie aus der Zeichnung ersichtlich, ist der eine Ansaugkanal 3 auf einer Seite, vorliegend im Kraftfahrzeug rechts, angeordnet.

Um einen ausreichenden Luftmassestrom zu erreichen, ist der Ansaugkanal 3 mit einem etwas größeren Querschnitt ausgebildet, jedoch muss dies nicht notwendigerweise der Fall sein. Vielmehr können auch die selben Bauteile für den entsprechenden Ansaugbereich wie für die zuvor beschriebene Gebläseeinheit 1 verwendet werden.

Im Unterschied zur zuvor beschriebenen Gebläseeinheit 1 ist an Stelle des linken Ansaugkanals 3' eine Abdeckung in Form einer Kunststoffkappe vorgesehen, die am Gehäuse 2 luftdicht angebracht ist, so dass von links her keine Luft aus dem Fahrzeuginnenraum angesaugt werden kann und die von rechts angesaugte Luft sich im Wesentlichen über das gesamte zweiflutige Laufrad 6 verteilt, d.h. mangels des zweiten Ansaugkanals 3' wird das eigentlich zweiflutig ausgebildete Gebläse im Prinzip einflutig betrieben.

## Patentansprüche

1. Ein- und zweiflutig betreibbare Gebläseeinheit (1, 1'), insbesondere für ein Kraftfahrzeug, mit einem zweiflutigen Laufrad (6), einem Ausblaskanal (5) und in einem Gehäuse (2) ausgebildeten Öffnungen für zwei Ansaugkanäle (3, 3'), **dadurch gekennzeichnet, dass** bei einflutigem Betrieb eine als Deckel ausgebildete Abdeckung am Gehäuse (2) fixiert ist und die Öffnung für einen der Ansaugkanäle (3') beständig verschließt.

2. Gebläseeinheit nach Anspruch 1, **dadurch gekennzeichnet, dass** der für einflutigen Betrieb vorgesehene Ausblaskanal (5) dem für zweiflutigen Betrieb vorgesehenen entspricht.

3. Gebläseeinheit nach Anspruch 1 oder 2, **dadurch gekennzeichnet, dass** bei einflutigem Betrieb zwei für zweiflutigen Betrieb vorgesehene Ansaugkanäle (3, 3') durch einen Ansaugkanal (3) gleichen oder größeren Querschnitts ersetzt sind.

4. Gebläseeinheit nach Anspruch 3, **dadurch gekennzeichnet, dass** der Querschnitt des für einflutigen Betrieb vorgesehenen Ansaugkanals (3) maximal doppelt so groß wie der Querschnitt eines der für zweiflutigen Betrieb vorgesehenen Ansaugkanäle (3, 3') ist.

5. Gebläseeinheit nach einem der vorhergehenden Ansprüche, **dadurch gekennzeichnet, dass** das Gehäuse (2) auf Kunststoff und mehrteilig ausgebildet ist.

6. Gebläseeinheit nach einem der vorhergehenden Ansprüche, **dadurch gekennzeichnet, dass** das Gehäuse (2) zumindest in der Mittelebene trennbar ist.

7. Kraftfahrzeug-Klimaanlage mit einer Gebläseeinheit (1) nach einem der Ansprüche 1 bis 6.

8. Verwendung einer zweiflutig betriebenen Gebläseeinheit (1') nach einem der Ansprüche 1 bis 6 in einem Van oder einem anderen, größeren Kraftfahrzeug und einer einflutig betriebenen Gebläseeinheit (1) nach einem der Ansprüche 1 bis 6 in einem kleineren Kraftfahrzeug.

## Claims

1. Blower unit (1, 1') that can be operated in single flow and double flow modes, in particular for a motor vehicle, with a double-flow impeller (6), a blow-out duct (5) and openings formed in a housing (2) for two inlet ducts (3, 3'), **characterised in that** for single-flow operation a cover made as a cap is fixed on the housing (2) so as to close off permanently the opening for one of the inlet ducts (3').

2. Blower unit according to Claim 1, **characterised in that** the blow-out duct (5) provided for single-flow operation corresponds to that provided for double-flow operation.

3. Blower unit according to Claims 1 or 2, **characterised in that** for single-flow operation two inlet ducts (3, 3') provided for double-flow operation are replaced by one inlet duct (3) with the same or a larger cross-section.

4. Blower unit according to Claim 3, **characterised in that** the cross-section of the inlet duct (3) provided for single-flow operation is at most twice as large as the cross-section of one of the inlet ducts (3, 3') provided for double-flow operation.

5. Blower unit according to any of the preceding claims, **characterised in that** the housing (2) is made of plastic in several parts.

6. Blower unit according to any of the preceding claims, **characterised in that** the housing (2) can be separated at least along its mid plane.

7. Motor vehicle air-conditioning system with a blower unit according to any of Claims 1 to 6.

8. Use of a blower unit (1') operated in double flow mode, according to any of Claims I to 6, in a van or other larger motor vehicle, and of a blower unit (1) operated in single flow mode according to any of Claims I to 6 in a smaller motor vehicle.

## Revendications

1. Unité de soufflante (1, 1') pouvant fonctionner à un seul flux et à double flux, en particulier pour un véhicule automobile, comprenant une roue mobile (6) à double flux, un conduit d'évacuation (5) et des ouvertures configurées dans un carter (2) et prévues pour deux conduits d'aspiration (3, 3'),
**caractérisée en ce que**, dans le cas d'un fonctionnement à un seul flux, un recouvrement, configuré comme un couvercle, est fixé sur le carter (2) et obture constamment l'ouverture prévue pour l'un des conduits d'aspiration (3').

2. Unité de soufflante selon la revendication 1,
**caractérisée en ce que** le conduit d'évacuation (5) prévu pour un fonctionnement à un seul flux correspond au fonctionnement prévu à double flux.

3. Unité de soufflante selon la revendication 1 ou 2,
**caractérisée en ce que**, dans le cas d'un fonctionnement à un seul flux, deux conduits d'aspiration (3, 3') prévus pour un fonctionnement à double flux sont remplacés par un seul conduit d'aspiration (3) de section identique ou supérieure.

4. Unité de soufflante selon la revendication 3,
**caractérisée en ce que** la section du conduit d'aspiration (3) prévu pour un fonctionnement à un seul flux est au maximum égale à deux fois la section de l'un des conduits d'aspiration (3, 3') prévus pour un fonctionnement à double flux.

5. Unité de soufflante selon l'une quelconque des revendications précédentes, **caractérisée en ce que** le carter (2) est réalisé en matière plastique et en plusieurs parties.

6. Unité de soufflante selon l'une quelconque des revendications précédentes, **caractérisée en ce que** le carter (2) est séparable au moins dans le plan médian.

7. Système de climatisation d'un véhicule automobile comprenant une unité de soufflante (1) selon l'une quelconque des revendications 1 à 6.

8. Utilisation d'une unité de soufflante (1') fonctionnant à double flux selon l'une quelconque des revendications 1 à 6, dans un monospace ou bien dans un autre véhicule automobile plus grand, et d'une unité de soufflante (1) fonctionnant à un seul flux selon l'une quelconque des revendications 1 à 6, dans un véhicule automobile plus petit.
